# EUROPEAN PATENT APPLICATION

(11) **EP 2 437 185 A2**
(43) Date of publication of application: **04.04.2012**
(21) Application number: 11178972.3
(22) Date of filing: 26.08.2011
(51) Int. Cl.: G06F 17/30

(54) **Search support device, search support method and computer-readable storage medium**

(30) Priority: 30.09.2010 JP 2010220879
(71) Applicant: AISIN AW CO., LTD., Anjo-shi, Aichi 444-1192 (JP)
(72) Inventor: Kawauchi, Hiroshi, Anjo-shi, Aichi 444-1192 (JP)
(74) Representative: TBK

(57) **Abstract**

A search support device comprises a storage medium storing strings to be searched, a search string accepting unit accepting input of a search string, a first search unit searching the storage medium for at least one first string that includes the search string, a second search unit searching the storage medium for at least one second string that includes a corrected string corrected from the search string, and a display control unit displaying a first choice, which is set to specify a specific first string from among the at least one first string to narrow search result, on a display unit in a first mode, and a second choice, which is set to specify a specific second string from among the at least one second string to narrow the search result, on the display unit in a second mode that is different from the first mode.

## Description

### INCORPORATION BY REFERENCE

The disclosure of Japanese Patent Application No. 2010-220879 filed on September 30, 2010 including the specification, drawings and abstract is incorporated herein by reference in its entirety.

### BACKGROUND OF THE INVENTION

### 1. Field of the Invention

The present invention relates to a search support device, a search support method and a computer-readable storage medium.

### 2. Description of the Related Art

In a related art, there is known a technique for a string search to, even when an erroneously input character is included in an input string, support a user in being able to save an effort for correcting the erroneously input character. For example, Japanese Patent Application Publication No. 11-242681 (JP-A-11-242681) describes a technique for reducing a correction effort when there is an input error in such a manner that a search for a string is carried out while a character is inserted between characters of an input string or a character in the input string is replaced with another character and then the search result is provided for a user. Furthermore, Japanese Patent Application Publication No. 2009-265013 (JP-A-2009-265013) describes a technique for searching from a database for a composite word that is created by replacing a character that tends to be erroneously input with another character.

### SUMMARY OF INVENTION

In a related art, an efficient search cannot be carried out in narrowing search result while increasing the number of input characters of a search string. That is, in a user interface by which characters are input one by one to specify a search string or in a user interface by which candidate words that may constitute a facility name, an address, or the like, are displayed as choices to accept a selection, search result that includes a search string may be narrowed each time a character is input or a candidate is selected. However, as in the case of the related art, in the configuration that a search based on an input string and a search in the case where an erroneously input character is corrected are carried out and then choices for narrowing the respective search results are displayed, the number of choices increases as compared with when only the former search is made. Thus, man-hours until search result have been narrowed also increase, and a search cannot be efficiently carried out. For example, when the address of a facility is specified in a navigation system to search for the facility, the number of facilities of which part of an address coincides with the specified address is considerably large. The configuration for making a search based on a string input in such a system and making a search in the case where an erroneously input character is corrected requires a large number of man-hours until a user narrows search result down to desired search result on the basis of choices for narrowing the search result.

The present invention provides a search support device, a search support method and a computer-readable storage medium for making an efficient search.

A first aspect of the present invention provides a search support device. The search support device includes: a storage medium that stores strings to be searched; a search string accepting unit that accepts input of a search string; a first search unit that searches the storage medium for at least one first string that includes the search string; a second search unit that searches the storage medium for at least one second string that includes a corrected string corrected from the search string; and a display control unit that displays a first choice, which is set to specify a specific first string from among the at least one first string to narrow search result, on a display unit in a first mode, and a second choice, which is set to specify a specific second string from among the at least one second string to narrow the search result, on the display unit in a second mode that is different from the first mode.

According to the first aspect, the first choice, that is set to specify the specific first string from among the at least one first string to narrow the search result, and the second choice, that is set to specify the specific second string from among the at least one second string to narrow the search result, are displayed such that the first choice is distinguished from the second choice. Thus, the user is able to visually recognize the respective choices and to distinguish between choices that are selectable when there is no error input and choices that are selectable when error input is corrected, and is able to efficiently narrow the search result while visually recognizing the input search string and the choices.

A second aspect of the present invention provides a search support method. The search support method includes: accepting input of a search string; searching a storage medium, which stores strings to be searched, for at least one first string that includes the search string; searching the storage medium for at least one second string that includes a corrected string corrected from the search string; displaying a first choice, which is set to specify a specific first string from among the at least one first string to narrow search result, on a display unit in a first mode; and displaying a second choice, which is set to specify a specific second string from among the at least one second string to narrow the search result, on the display unit in a second mode that is different from the first mode.

A third aspect of the present invention provides a computer-readable storage medium that stores computer-executable instructions for performing a search support function. The search support function includes: accepting input of a search string; searching a storage medium, which stores strings to be searched, for at least one first string that includes the search string; searching the storage medium for at least one second string that includes a corrected string corrected from the search string; displaying a first choice, which is set to specify a specific first string from among the at least one first string to narrow search result, on a display unit in a first mode; and displaying a second choice, which is set to specify a specific second string from among the at least one second string to narrow the search result, on the display unit in a second mode that is different from the first mode.

According to the second and third aspects, as well as the first aspect, the first choice that is set to specify the specific first string from among the at least one first string to narrow the search result, and the second choice, that is set to specify the specific second string from among the at least one second string to narrow the search result, are displayed in different modes. Thus, it is possible to efficiently narrow the search result.

### BRIEF DESCRIPTION OF DRAWINGS

The features, advantages, and technical and industrial significance of this invention will be described below with reference to the accompanying drawings, in which like numerals denote like elements, and wherein:
FIG. 1 is a block diagram that shows a search support device;
FIG. 2 is a flowchart that shows a search support process;
FIG. 3A and FIG. 3B are views that show examples of an user interface; and
FIG. 4 is a view that shows an example of a user interface.

### DETAILED DESCRIPTION OF EMBODIMENTS

Hereinafter, embodiments of the present invention will be described in accordance with the following order.
(1) Configuration of Search Support Device
(2) Search Support Process
(3) Alternative Embodiments

### (1) Configuration of Search Support Device

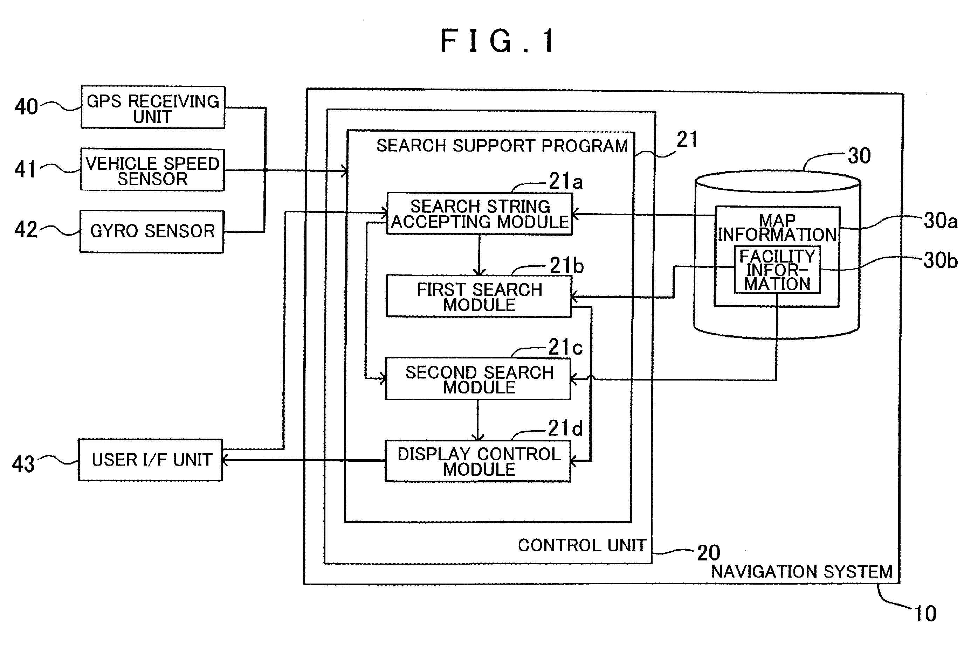

FIG. 1 is a block diagram that shows the configuration of a search support device according to an embodiment of the present invention. In the present embodiment, the search support device is implemented by a navigation system 10. The navigation system 10 includes a control unit 20 and a storage medium 30. The control unit 20 includes a CPU, a RAM, a ROM, and the like. The control unit 20 is able to execute programs (computer-executable instructions) stored in the storage medium 30 or the ROM. In the present embodiment, a navigation program formed of a plurality of program modules may be executed as one of the programs stored in the storage medium 30 or the ROM. A search support program 21 is one of the program modules that constitute the navigation program. The navigation program is a program that causes the control unit 20 to implement the function of searching for a travel route from a current position of a vehicle to a destination and supporting the vehicle to run along the travel route.

In the present embodiment, in order to implement the function of the navigation program, the vehicle includes a GPS receiving unit 40, a vehicle speed sensor 41, a gyro sensor 42 and a user I/F unit 43. The GPS receiving unit 40 receives electric waves from GPS satellites and outputs a signal for calculating a current position of the vehicle through an interface (not shown). The vehicle speed sensor 41 outputs a signal corresponding to the rotational speed of wheels equipped for the vehicle. The gyro sensor 42 detects an angular acceleration of a turn of the vehicle and outputs a signal corresponding to the direction of the vehicle. The control unit 20 determines the current position of the vehicle on the basis of the output signals of the GPS receiving unit 40, vehicle speed sensor 41, gyro sensor 42, and the like, and map information 30a (described later).

The user I/F unit 43 is an interface unit for providing various pieces of information to a user or accepting a user's command, and includes a touch panel display (not shown), a speaker (not shown), and the like. The control unit 20 outputs a control signal to the user I/F unit 43 to cause the user I/F unit 43 to display a selected image on the touch panel display and to output a selected sound from the speaker. In addition, the control unit 20 determines the details of the user's command on the basis of the output signal of the user I/F unit 43.

The storage medium 30 prestores the map information 30a. The map information 30a includes node data, shape interpolation point data, link data, facility information 30b, and the like. The node data indicate the positions, or the like, of nodes set on roads on which the vehicle runs. The shape interpolation point data are used to determine the shape of a road between the nodes. The link data indicate a link between the nodes. The facility information 30b indicates a plurality of facilities present on the roads or around the roads. The facility information 30b is defined by associating information, such as a name, an attribute and position (coordinates and address), with each of the plurality of facilities. In the present embodiment, the names, the attributes and the addresses associated with the pieces of the facility information 30b are expressed by strings, and the strings may be searched.

The navigation program causes the control unit 20 to implement the function of determining the current position of the vehicle on the basis of the output signals of the GPS receiving unit 40, vehicle speed sensor 41 and the gyro sensor 42 and guiding the vehicle so as to run along the route to a preset destination by consulting the map information 30a. The user is able to use a search string as a key to search the facility information 30b included in the map information 30a for a facility with which the desired string is associated, and is able to set the found facility as a destination. In the present embodiment, in order to cause the control unit 20 to implement the function of searching for the destination, the search support program 21 includes a search string accepting module 21 a, a first search module 21b, a second search module 21c and a display control module 21d.

The search string accepting module 21a is a module that causes the control unit 20 to implement the function of accepting input of a search string. The control unit 20 acquires an output signal of the user I/F unit 43 to accept input of a search string. In the present embodiment, through the process of the display control module 21d described later, the control unit 20 outputs a control signal to the user I/F unit 43 to thereby display characters and strings as choices for narrowing the search result on the touch panel display of the user I/F unit 43. Thus, the control unit 20 accepts a signal output from the user I/F unit 43 in association with selection of a character displayed on the touch panel display through the process of the search string accepting module 21 a to thereby make it possible to accept input of a search string character by character. In addition, the control unit 20 accepts a signal output from the user I/F unit 43 in association with selection of a string displayed on the touch panel display through the process of the search string accepting module 21a to thereby make it possible to accept input of a search string one by one.

The first search module 21b is a module that causes the control unit 20 to implement the function of searching the storage medium 30 for a first string that includes a search string. That is, the control unit 20 consults the facility information 30b and searches for a string (name, attribute, position, or the like, associated with a facility) that includes the search string. When information that indicates the facility associated with the string that includes the search string is included in the facility information 30b, the control unit 20 sets the string that includes the search string as a first string. That is, the control unit 20 sets the name, attribute, position, or the like, that includes the search string as the first string from among the names, attributes, positions, or the like, associated with facilities. Note that, when there are a plurality of first strings, each of the first strings includes the search string, so there are a plurality of search result candidates. In this case, the first strings may have different characters subsequent to the search string or different strings that include the subsequent characters. Therefore, by adding the search string with a character subsequent to the search string, search result may be narrowed. Then, in the present embodiment, a character subsequent to a search string in the first string, and a string generated by adding the character to the search string are set as choices for specifying a specific first string (a desired first string) from among the first strings to narrow the search result. The choices may be set for reducing the number of the first strings included in the search result. Note that, in the present embodiment, when a string generated by adding a search string with a character subsequent to the search string is a predetermined word, the control unit 20 sets the word as the choice for specifying the specific first string from among the first strings to narrow the search result. Here, the word is a frequently used word as a string associated with a facility, and a word of which the number of associated facilities is larger than or equal to a predetermined value is determined as the word in advance.

The second search module 21 c is a module that causes the control unit 20 to implement the function of searching the storage medium 30 for a second string that includes a corrected string corrected from a search string. That is, the control unit 20 corrects the search string to generate the corrected string in order to acquire a search result on the assumption that the search string includes an erroneously input character as a second string. Then, when information that indicates a facility associated with a string (name, attribute, position, or the like, associated with the facility) that includes the corrected string is included in the facility information 30b, the control unit 20 sets the string that includes the corrected string as a second string. That is, the name, attribute, position, or the like, associated with the facility is set as the second string.

Note that, in the present embodiment, in order to prevent coincidence between a character as the choice for specifying the specific first string and a character as a choice for specifying a specific second string (a desired second string) from among the second strings to narrow the search result, a character is further added to the corrected string to search for the second string. That is, a string that is obtained by adding a character, which is not the choice for specifying the specific first string, to the end of the corrected string is generated to search for a second string that includes the generated string. When the second string is found through searching, the character added to the end of the corrected string becomes the choice for specifying the specific second string, so it is possible to prevent coincidence between a character as the choice for specifying the specific first string and a character as the choice for specifying the specific second string.

Note that, as well as the first string, when there are a plurality of the second strings, there are a plurality of search result candidates. Then, strings that include a character subsequent to the corrected string are set as the choices for specifying the specific second string. The choices may be set for reducing the number of the second strings included in the search result. In the present embodiment, when a string generated by adding the corrected string with a character subsequent to the corrected string is the above described predetermined word, the control unit 20 sets the word as the choice for specifying the specific second string. Here, the corrected string may be a string different from the search string. In the present embodiment, the control unit 20 generates the corrected string by replacing one or more characters of the search string with another character or characters. A method of generating the corrected string is not specifically limited, and an example of the method will be described in detail later.

The display control module 21 d is a module that causes the control unit 20 to implement the function of displaying the choice for specifying the specific first string in a first mode and displaying the choice for specifying the specific second string in a second mode that is different from the first mode. In the present embodiment, the mode of the choices for narrowing the search result is a mode of icons for displaying characters and strings, and the first mode differs from the second mode in the colors of frames and inside of the frames for displaying characters and strings.

Then, the control unit 20 outputs a control signal to the user I/F unit 43 so that characters and strings that are the choices for specifying the specific first string are displayed and the colors of frames and inside of the frames of the characters and strings are set in the predetermined first mode. In addition, the control unit 20 outputs a control signal to the user I/F unit 43 so that characters and strings that are the choices for specifying the specific second string are displayed and the colors of frames and inside of the frames of the characters and strings are set in the predetermined second mode. As a result, on the touch panel display, the choice for specifying the specific first string is displayed in the first mode, and the choice for specifying the specific second string is displayed in the second mode.

Note that, as described above, the choice for specifying the specific first string and the choice for specifying the specific first string are characters and strings. In addition, the touch panel display of the user I/F unit 43 accepts the search string through the process of the search string accepting module 21 a. Thus, when choices for specifying the specific first string and the choice for specifying the specific second string are displayed through the process of the display control module 21 d, it is possible to narrow the search result by selecting any one of these choices.

In addition, according to the above described process, the user is able to distinguish between the choice for specifying the specific first string and the choice for specifying the specific second string. Thus, the user is able to visually recognize the respective choices and to distinguish between choices that are selectable when there is no error input and choices that are selectable when error input is corrected, and is able to efficiently narrow the search result while visually recognizing the input search string and the choices.

Furthermore, a string for making a search for the second string is generated by adding a character, which is not set as the choice for specifying the specific first string, to the end of a corrected string. Thus, a character subsequent to a search string included in the first string does not coincide with a character subsequent to the corrected string included in the second string, so the choices may be provided in a state where a character set as a choice displayed in the first mode do not duplicate with a character set as a choice displayed in the second mode.

Furthermore, according to the above described process, it is possible to provide not only a user interface by which a choice for narrowing search result is input character by character but also a user interface by which a choice is input by string. In this case, a string that includes a character subsequent to the search string is extracted from the first string, and then the extracted string is set as the choice for specifying the specific first string. In addition, a string that includes the corrected string is extracted from the second string, and then the extracted string is set as the choice for specifying the specific second string. Thus, it is possible to narrow the search result faster than the user interface by which the choice for narrowing the search result is input character by character.

### (2) Search Support Process

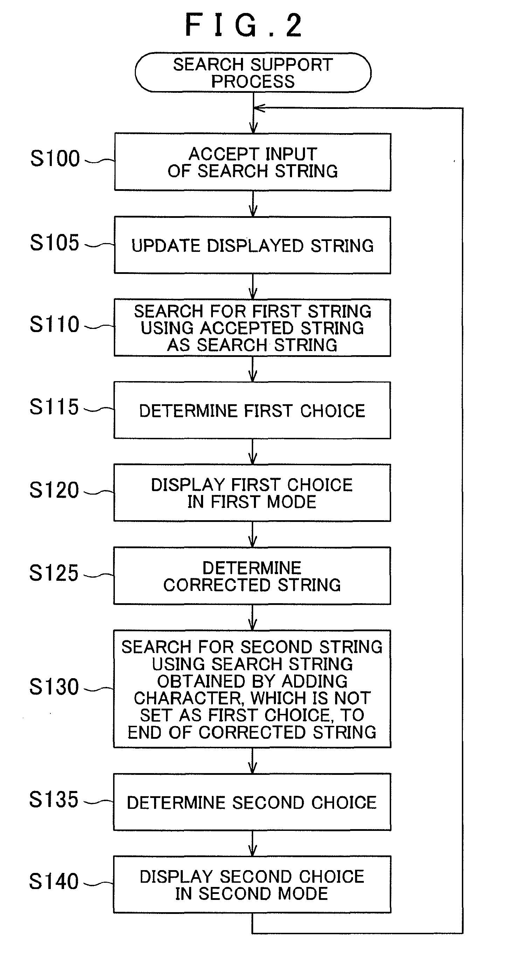

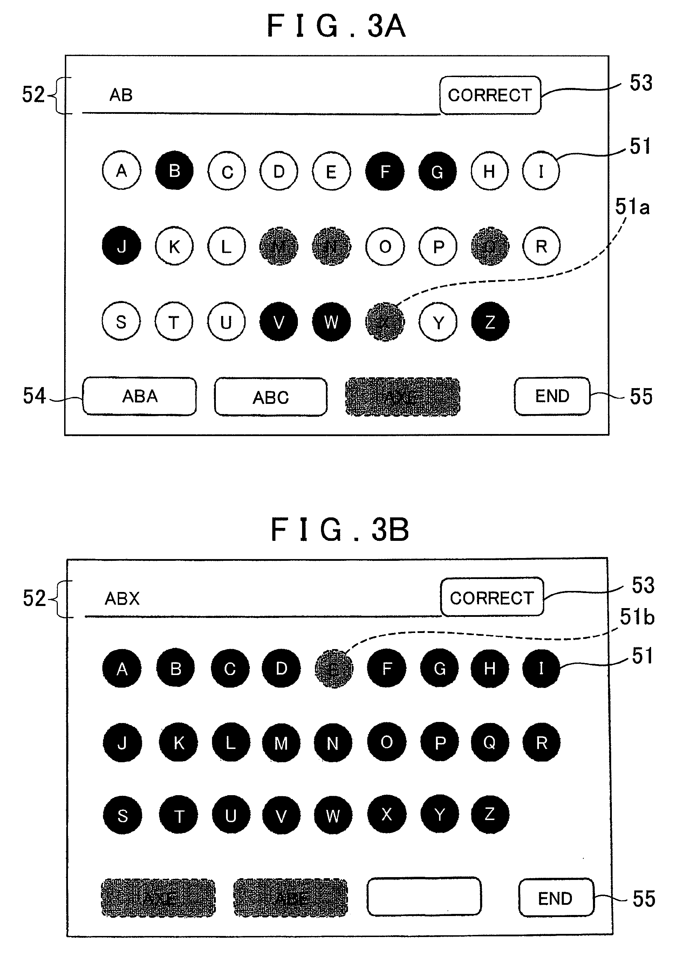

Next, a search support process according to the present embodiment will be described in detail. FIG. 2 is a flowchart that shows the search support process. The search support process is executed when the control unit 20 supports the user in selecting a destination in accordance with the search support program 21. In addition, FIG. 3A is an example of a user interface for inputting a search string. In this example, the interface is formed so that circular buttons 51 are placed in the middle of the screen, a search string display area 52 is placed at the top of the screen, a rectangular button 53 is placed on the right side of the search string display area 52, rectangular buttons 54 are placed at the bottom of the screen, and a rectangular button 55 is placed on the right side of the buttons 54. The circular buttons 51 indicate English alphabet characters that are used as choices for narrowing the search result. The search string display area 52 displays an input search string. The rectangular button 53 is used to correct a character. The rectangular buttons 54 indicate strings that are used as choices for narrowing the search result. The rectangular button 55 is used to indicate completion of input.

The search support process shown in FIG. 2 is executed when the user uses the user I/F unit 43 to issue a command to execute the process of searching for a string associated with a facility that can be a destination. As the search support process is executed, the control unit 20 initially outputs a control signal to the user I/F unit 43 to thereby display a user interface screen as shown in FIG. 3A. At this time, no character is input in the search string display area 52, and all the characters may be input by the circular buttons 51.

Subsequently, the control unit 20 accepts input of a search string by the process of the search string accepting module 21 a (step S100). That is, after issuing a command to execute the process of searching for a string associated with a facility that can be a destination, when step S100 is executed for the first time in the phase before the search for a string is complete (hereinafter, referred to as initial execution), the control unit 20 accepts input of a character in a state where the circular buttons 51 corresponding to all the characters are set as choices and the rectangular buttons 54 are not set as the choices. When step S100 is executed in course of a loop process after one or more characters are input (hereinafter, referred to as loop execution), the control unit 20 accepts selection of the circular button 51 corresponding to a character that is set as a choice or selection of the rectangular button 54 corresponding to a string that is set as the choice through a process described later. Note that, as the rectangular button 55 is operated on the user I/F unit 43 to indicate completion of input, the control unit 20 determines whether the choice(s) selected before the rectangular button 55 is operated is only a choice (hereinafter, referred to as a first choice) for specifying a specific first string from among first strings to narrow search result. When the selected choice(s) is only the first choice, the control unit 20 determines a facility with which a string that includes the first choice(s) selected before the rectangular button 55 is operated is associated, and causes the touch panel display to display the screen for fixing the determined facility as the destination. On the other hand, when the choice(s) selected before the rectangular button 55 is operated includes a choice (hereinafter, referred to as a second choice) for specifying a specific second string from among second choices to narrow the search result, the control unit 20 determines a facility with which a string (a string that includes the second choice(s), or a string that includes a combination of the first choice(s) and the second choice(s)) that includes the choice(s) selected before the rectangular button 55 is operated is associated, and causes the touch panel display to display the screen for fixing the determined facility as the destination.

After that, the control unit 20 updates a displayed string in the search string display area 52 through the process of the display control module 2 1 d (step S105). That is, the control unit 20 causes the search string display area 52 to display a character (or a string) that reflects the details accepted in step S 100. For example, when step S105 is executed after initial execution of step S100, the character selected in step S100 is displayed in the search string display area 52.

In the case where step S105 is executed after the loop execution of step S100, when a character that is set as the first choice or a character that is set as the second choice is selected in step S100, the control unit 20 updates the displayed string in the search string display area 52 with a string that is obtained by adding the selected character to the string (search string) that has been already displayed in the search string display area 52. That is, in the present embodiment, even in a state where a character set as the second choices is selected and, therefore, the search string is presumed to include an erroneously input character, the search string display area 52 displays an input character without correcting an input error. On the other hand, when a string set as the first choice or a string set as the second choice is selected in step S100, the control unit 20 updates the displayed string in the search string display area 52 with the selected string.

Subsequently, the control unit 20 sets the accepted string as a search string to search for the first string through the process of the first search module 21b (step S110). That is, the control unit 20 recognizes the displayed string updated in step S105 as the search string and consults the facility information 30b to search for the first string that includes the search string. Then, the control unit 20 determines the first choice through the process of the display control module 21d (step S115). That is, the control unit 20 determines a character subsequent to the search string included in the first string, and sets the determined character as the first choice. In addition, when the string generated by adding the search string with the character subsequent to the search string is the above described word, the control unit 20 sets the string that indicates the word as a string of the first choice.

After that, the control unit 20 displays the first choice in a first mode through the process of the display control module 21 d (step S120). That is, the control unit 20 determines a character of the first choice, and displays the circular button 51 corresponding to the character of the first choice in the first mode. In addition, the control unit 20 determines a string of the first choice, and displays the rectangular button 54 corresponding to the string of the first choice in the first mode. Note that, in FIG. 3A, the mode in which a black character is displayed in a white background within the solid frame border shows an example of the first mode.

Subsequently, the control unit 20 determines a corrected string through the process of the second search module 21 c (step S125). That is, the control unit 20 generates the corrected string by replacing one or more characters of the search string with another character. In the present embodiment, in order to correct a typical input error, the following three types of methods are used to generate the corrected string. That is, when there are duplicate characters, the duplicate characters are corrected to one character. In addition, each of the characters that constitute the search string is targeted, and the targeted character is replaced with a character that is arranged close to the targeted character on the user interface. For example, in the user interface shown in FIG. 3A and FIG. 3B, when the circular buttons 51 for inputting other characters are placed around any one of the circular buttons 51 for inputting a selected character, the targeted character is replaced with the characters corresponding to the circular buttons 51 placed therearound.

Furthermore, a word similar to a typical word is corrected to the typical word. Here, a typical word may be, for example, a word of which the number of associated facilities of the facility information 30b is larger than or equal to a predetermined number, a frequently used word, or the like. When a plurality of strings are derived through the above process, each of the plurality of strings is set as the corrected string. Note that, the above described methods of generating the corrected string are examples, and the corrected string may be generated by another method. Further, the number of corrected characters corrected from the search string in order to generate the corrected string is selectable, and, for example, the number of the corrected characters may be determined on the basis of the number of characters of the search string, the correction ratio with respect to the search string, or the like.

When the corrected string is determined as descried above, the control unit 20 sets a string that is obtained by adding a character, which is not set as the character(s) of the first choice, to the end of the corrected string as a search string to search for the second string through the process of the second search module 21c (step S130). That is, the control unit 20 determines characters that are not set as the character(s) of the first choice. Then, the control unit 20 generates a string that is obtained by adding the determined characters to the corrected string, and consults the facility information 30b to search for the second string that includes the generated string. For example, in the example of FIG. 3A, among the characters of the circular buttons 51, characters other than black characters with white background in the solid frame borders, are not set as the characters of the first choice. Thus, in this example, strings that are respectively obtained by adding these characters to the corrected string are used to search for the second strings.

After that, the control unit 20 determines the second choice through the process of the display control module 21d (step S135). That is, when the second string has been found in the search in step S130, the control unit 20 determines the character that is generated for the search and that is added to the end of the corrected string, and sets the determined character as the character of the second choice. In addition, when the second string has been found in the search in step S130 and the string generated by adding the corrected string with a character subsequent to the corrected string is the above described word, the control unit 20 sets the string that indicates the word as the string of the second choice.

Subsequently, the control unit 20 displays the second choice in a second mode through the process of the display control module 21d (step S140). That is, the control unit 20 displays the circular button 51 corresponding to the character of the second choice in the second mode. In addition, the control unit 20 displays the rectangular button 54 corresponding to the string of the second choice in the second mode. Note that, in FIG. 3A, the mode in which a black character is displayed in a gray background within the broken frame border shows an example of the second mode. In addition, when the number of the rectangular buttons 54 for displaying a string of the first choice and a string of the second choice is smaller than the total number of strings of the first choice and strings of the second choice, the strings of the first choice and the strings of the second choice may be displayed in the rectangular buttons 54 in order of precedence determined for the strings of the first choice and the strings of the second choice in accordance with a predetermined criterion.

Note that, when the search result is narrowed, there may be a character that neither corresponds to the first choice nor corresponds to the second choice. That is, in step S 130, when no string is detected, that is, no second string is found, as a result of a search for a string that is obtained by adding a character, other than the first choice, to the end of the corrected string as the search string, the character added to the end of the corrected string neither corresponds to the first choice nor corresponds to the second choice. In this case, the control unit 20 displays the character that neither corresponds to the first choice nor corresponds to the second choice is displayed in a mode that is different from the first mode or the second mode. Such a character that neither corresponds to the first choice nor corresponds to the second choice is an unselectable character. In FIG. 3A, the mode in which a white character is displayed in a black background within a solid frame border is used to indicate the character that neither corresponds to the first choice nor the second choice.

Through the above process, when the first choice is displayed in the first mode and the second choice is displayed in the second mode, the control unit 20 repeats the processes in step S100 and the following steps in order to make it possible to narrow the search result by the first choice and the second choice. As a result, the user is able to narrow the search result while distinguishing between a first choice obtained as a result of the first search and the second choice obtained as a result of the second search.

Furthermore, according to the above described process, a change in the user interface screen may also further distinctly point out to the user that there is an input error. That is, in the present embodiment, as described above, even in a state where a character of the second choice is selected in course of inputting a search string and, therefore, it may be presumed that the search string includes an erroneously input character, the search string display area 52 displays an input character without correcting an input error. Then, the string displayed in the search string display area 52 is set as the search string. Therefore, after a character of the second choice is selected, a string that includes the selected character is set as the search string, and the search string includes a character that is not set as the first choice. Thus, even when a search for the search string is made, no first string is found and no first choice is displayed as the search result. In this case, a selectable choice includes only the second choice.

For example, it is assumed that, in a situation that two characters shown in FIG. 3A have been input in the search string display area 52 in the user interface shown in FIG. 3A, the user selects a character corresponding to the circular button 51a displayed as the second choice in step S 100. In this case, in response to the selection, the control unit 20 updates the displayed string in step S105. That is, as shown in FIG. 3B, a string formed of the two characters shown in the search string display area 52 and the character corresponding to the circular button 51a in FIG. 3A is displayed in the search string display area 52.

Furthermore, in this state, the displayed string is set as the search string and then the processes in steps S 110 and S 115 are executed; however, the search string includes a character that is not set as the first choice (character corresponding to the circular button 51a), so no search for the first string is made and no first choice is present. Thus, a search for the second string is made through the processes of steps S125 and S130 based on the corrected string corrected from the search string, so only the second choice is present. Therefore, the second choice is displayed in the second mode through the process of step S 140, and characters that are not set as the second choice is displayed in the mode for displaying a character that neither corresponds to the first choice nor corresponds to the second choice.

For example, as shown in FIG. 3B, the character corresponding to the circular button 51b is displayed in the second mode, the circular buttons corresponding to the other characters are displayed in the mode for displaying the character that neither corresponds to the first choice nor corresponds to the second choice, and the strings are displayed in the second mode in the rectangular buttons 54. Thus, the user recognizes a state where there is no first choice that is a choice in the case where there is no input error because of a change in the screen from the user interface shown in FIG. 3A to the user interface shown in FIG. 3B to thereby make it possible to recognize that user's input includes an input error.

### (3) Alternative Embodiments

The above described embodiment is one example for carrying out the aspect of the present invention, and other various embodiments may be employed as long as a choice for specifying a specific first string from among first strings to narrow search result and a choice for specifying a specific second string from among second strings to narrow the search result are displayed in different modes (a first mode and a second mode). For example, a corrected string may be generated by inserting one or more characters in between the characters of a search string. The mode in which a choice for narrowing the search result is displayed is not specifically limited. For example, the choices may be displayed in various modes, such as character color, character type and the degree of highlight.

Furthermore, when a character selected in order to narrow the search result is a character subsequent to the corrected string (character of the second choice), a string that is obtained by adding the selected character to the corrected string may be set as a new search string. For example, in step S100, when a character of the second choice is selected, the displayed string in the search string display area 52 is updated with a string that is obtained by adding the selected character to the corrected string. In addition, in step S100, when a string of the second choice is selected, the displayed string in the search string display area 52 is updated with the selected string. With the above configuration, it is possible to narrow the search result while successively correcting an input error of the search string.

Furthermore, a second search may be made without adding a character to the end of a corrected string. In this case, there is a possibility that the choice for specifying the specific first string coincides with the choice for specifying the specific second string. Then, when the choice for specifying the specific first string coincides with the choice for specifying the specific second string, the same choice is desirably displayed on the display unit in a third mode that is different from the first mode or the second mode. With the above configuration, it may be demonstrated that the choice displayed in the first mode is a choice for specifying the specific first string and is not the choice for specifying the specific second string. In addition, it may be demonstrated that the choice displayed in the second mode is the choice for specifying the specific second string and is not the choice for specifying the specific first string. Furthermore, it may be demonstrated that the choice displayed in the third mode is the choice for specifying the specific first string and is the choice for specifying the specific second string.

Furthermore, a string of the second choice for specifying the specific second string may be determined by extracting a string, which includes a character subsequent to the corrected string, from second strings. Thus, the string of the second choice may be a string subsequent to only the end of a corrected string or may be a string that includes the corrected string. In the latter case, a string that includes the corrected string may be displayed to demonstrate the second choice together with the details of correction made on the search string. An example of indicating the details of correction may be, for example, demonstrating a character that is deleted through correction in parentheses.

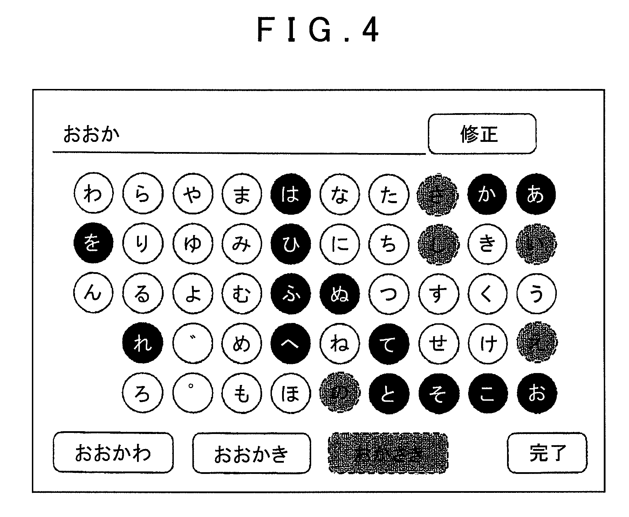

Furthermore, the user interface for inputting the search string is not limited to a user interface for inputting alphabets; it may be applied to a user interface that sets characters of a selected language as the search string. For example, the aspect of the present invention may be applied to a user interface for inputting Japanese as shown in FIG. 4. That is, the user interface for inputting Japanese is configured to accept input of a search string, search a storage medium for a first string that includes a search string and search the storage medium for a second string that includes a corrected string corrected from the search string. Then, it is also applicable that a first choice for specifying a specific first string from among the first strings to narrow search result is displayed on a display unit in a first mode and a second choice for specifying a specific second string from among the second string to narrow the search result is displayed on the display unit in a second mode that is different from the first mode. In FIG. 4, the mode in which a black character is displayed in a white background within the solid frame border is the first mode, and the mode in which a black character is displayed in a gray background within the broken frame border is the second mode. In addition, a character that neither corresponds to the first choice nor corresponds to the second choice is an unselectable character, and is displayed in the mode in which a white character is displayed in a black background within a solid frame border.

As described above, in the embodiment of the present invention, the first search for searching the storage medium 30 the a first string that includes the search string is made, the second search for searching the storage medium 30 for the second string that includes the corrected string is made, the first choice for specifying the specific first string from among the first strings to narrow the search result is displayed on the display unit in the first mode, and the second choice for specifying the specific second string from among the second strings to narrow the search result is displayed on the display unit in the second mode that is different from the first mode. That is, the choices are displayed so that the first choice may be distinguished from the second choice. Thus, the user is able to visually recognize the respective choices and to distinguish between a choice that are selectable when there is no error input and a choice that are selectable when an input error is corrected, and is able to efficiently narrow the search result while visually recognizing the input search string and the choices.

Note that the storage medium 30 just needs to store the strings to be searched, and various pieces of information indicated by the strings can be searched. For example, the map information stored in the storage medium 30 of the navigation system includes information that indicates facilities that can be set as a destination, or the like, and names, attributes, addresses, and the like, are associated with the facilities. Then, information expressed by characters, such as these names, attributes and addresses, can be the strings to be searched.

The search string accepting module 21a just needs to be able to accept user's input operation to acquire a string to be searched as the search string. That is, the search string accepting module 2 1 a just needs to be able to search for the input search string to narrow the search result. A string may be inputtable character by character or may be inputtable by a plurality of characters, for example, word by word.

The first search module 21b just needs to be able to search the storage medium 30 for the first string that includes the search string. That is, the first search module 21b just needs be able to acquire the search result on the assumption that the search string has no input error as the first string. The number of the first strings may be zero or more. That is, when the number of the first strings is zero, it means that no string that coincides with the search string is stored in the storage medium 30. When the number of the first strings is one, it means that the search result that coincides with the search string is obtained. When the number of the first strings is multiple, it is necessary to further narrow the search result.

The second search module 21c just needs to be able to search the storage medium 30 for the second string that includes the corrected string. That is, the second search module 21c just needs to be able to acquire the search result on the assumption that the search string includes an input error as the second string. The corrected string may be a string that is generated on the basis of the search string and that is different from the search string. The corrected string may be generated by replacing one or more characters of the search string with another character or may be generated by inserting one or more characters in between characters of the search string. The number of corrected characters may be selected, and may be, for example, determined on the basis of the number of characters of the search string, the correction ratio with respect to the search string, or the like. In addition, a method of selecting a correction target may be selected, and may be, for example, a method in which it is assumed that there is a typical input error (duplicate characters, characters placed close to the target character on a character input UI, or the like) and then a right character for correcting the input error is presumed and a method in which a word similar to a typical word (a word of which the number of records in the storage medium 30 is larger than or equal to a predetermined number, a frequently used word, or the like) is corrected to the typical word.

The display control module 21d just needs to be able to display the first choice on a display unit in the first mode, and just needs to be able to display the second choice on the display unit in the second mode that is different from the first mode. That is, when a choice for narrowing the search result is provided for the user, the display control module 21d just needs to be able to control the display unit so as to determine whether a search method is the first search or the second search in order to determine the choice.

The choice for narrowing the search result just needs to be information that is provided to the user so that a search is performed again on the basis of a selected choice to narrow the search result. The choice may be provided in character, or may be provided in string. The former case may be configured so that the character that is set as a choice is selectable and a character that is not set as the choice is unselectable. The mode for displaying the choice for narrowing the search result is not specifically limited. The choice for narrowing the search result may be displayed in various modes, such as color, the type of character, the degree of highlight and icon. In addition, the first mode and the second mode just need to be different from each other, and may be configured to distinguish between searches based on different search keys (the search string or the corrected string) in such a manner that the modes for displaying choices for narrowing the search result are varied.

Furthermore, input of a character displayed on the display unit as the choice (the first choice or the second choice) for narrowing the search result may be accepted character by character to accept input of the search string. That is, a character subsequent to the search string included in the first string is set as the first choice, and a character subsequent to the corrected string included in the second string is set as the second choice. As a result, the character subsequent to the search string is displayed in the first mode, and the character subsequent to the corrected string is displayed in the second mode. In this configuration, the character subsequent to the search string and the character subsequent to the corrected string are the choices for narrowing the search result, and the other characters are not the choices for narrowing the search result. Thus, any one character is selected among the characters displayed in the first mode or in the second mode to thereby make it possible to narrow the search result.

Here, when a character is selected as the choice for narrowing the search result, the first search and the second search may be made again using a string that is obtained by adding the selected one character to the search string as a new search string to narrow the search result with the progress of input of characters for the search string. With the above configuration, the user is able to input the character that is the choice for narrowing the search result while determining whether a search method for determining inputtable characters is the first search or the second search. Note that, when the character selected in order to narrow the search result is a character subsequent to the corrected string, a string that is obtained by adding the selected character to the corrected string may be set as the new search string.

Furthermore, the second search just needs to be a search for a string that includes the corrected string and may be a search for a string that includes a string generated by adding another character to the corrected string. For example, the second search may be configured to search for the second string that includes a string that is obtained by adding a character, which is not set as the first choice, to the end of a corrected string. When the second string is obtained through the above search, the character added to the end of the corrected string is set as the second choice. That is, in a situation that a character is displayed in the first mode as the first choice, a character other than the character displayed in the first mode is used as a character set as the second choice. In this configuration, the character displayed in the first mode is the first choice for reducing the number of the first strings found on the basis of the search string, and the character displayed in the second mode is the second choice for reducing the number of the second strings found on the basis of the corrected string, so it is possible to provide the choices with no duplication.

Furthermore, selection of a string displayed on the display unit as the choice (the first choice and the second choice) for narrowing the search result may be accepted to accept input of the search string. That is, a string that includes a character subsequent to the search string is extracted from the first string and is set as the first choice, and a string that includes a character subsequent to the corrected string is extracted from the second string and is set as the second choice. As a result, the string that includes the character subsequent to the search string is displayed in the first mode, and the string that includes the character subsequent to the corrected string is displayed in the second mode. That is, the string that includes a character subsequent to the search string or the character subsequent to the corrected string is made selectable to thereby make it possible to narrow the search result faster than a user interface in which a search string is input character by character.

Note that a string that includes a character subsequent to the search string or a string that includes a character subsequent to the corrected string just needs to include a character subsequent to the search string or the corrected string, and the string may be a string subsequent to only the search string, may be a string subsequent to only the corrected string, or may be a string that includes the search string or a string that includes the corrected string. In the latter case, when a string that includes the corrected string is displayed, it is possible to demonstrate the second choice together with the details of correction made on the search string.

Furthermore, when the first choice is the same as the second choice, the same choice may be displayed on the display unit in the third mode that is different from the first mode or the second mode. With the above configuration, it may be demonstrated that a choice displayed in the first mode is the first choice and is not the second choice. In addition, it may be demonstrated that a choice displayed in the second mode is the second choice and is not the first choice. Furthermore, it may be demonstrated that a choice displayed in the third mode is the first choice and is the second choice.

The above described search support device, search support method and computer-readable storage medium may be implemented as a sole device or may be implemented as a plurality of devices. In addition, the above described search support device, search support method and computer-readable storage medium may be implemented by utilizing a component shared with various portions provided for a vehicle or may be implemented in cooperation with various portions not provided for a vehicle, and are implemented in various forms. In addition, the above described search support device, search support method and computer-readable storage medium may be modified where appropriate; for example, part of the configuration is software and the other part of the configuration is hardware. Of course, the storage medium storing software may be a magnetic storage medium or may be a magnetooptical storage medium, and any storage media that will be developed in the future may also be used similarly.
A search support device comprises a storage medium storing strings to be searched, a search string accepting unit accepting input of a search string, a first search unit searching the storage medium for at least one first string that includes the search string, a second search unit searching the storage medium for at least one second string that includes a corrected string corrected from the search string, and a display control unit displaying a first choice, which is set to specify a specific first string from among the at least one first string to narrow search result, on a display unit in a first mode, and a second choice, which is set to specify a specific second string from among the at least one second string to narrow the search result, on the display unit in a second mode that is different from the first mode.

## Claims

1. A search support device comprising:
a storage medium that stores strings to be searched;
a search string accepting unit that accepts input of a search string;
a first search unit that searches the storage medium for at least one first string that includes the search string;
a second search unit that searches the storage medium for at least one second string that includes a corrected string corrected from the search string; and
a display control unit that displays a first choice, which is set to specify a specific first string from among the at least one first string to narrow search result, on a display unit in a first mode, and a second choice, which is set to specify a specific second string from among the at least one second string to narrow the search result, on the display unit in a second mode that is different from the first mode.

2. The search support device according to claim 1, wherein
the search string accepting unit accepts input of a character, which is displayed on the display unit as one of the first choice and the second choice, one by one to thereby accept input of the search string, and
the display control unit sets a character, which is subsequent to the search string and which is included in the at least one first string, as the first choice, and sets a character, which is subsequent to the corrected string and which is included in the at least one second string, as the second choice.

3. The search support device according to claim 2, wherein
the second search unit searches for the at least one second string that includes a string generated by adding a character, which is not set as the first choice, to an end of the corrected string, and
the display control unit sets the character, which is added to the end of the corrected string, as the second choice.

4. The search support device according to any one of claims 1 to 3, wherein
the search string accepting unit accepts selection of a string, which is displayed on the display unit as one of the first choice and the second choice, to thereby accept input of the search string, and
the display control unit sets a string, which is extracted from the at least one first string and which includes a character subsequent to the search string, as the first choice, and sets a string, which is extracted from the at least one second string and which includes a character subsequent to the corrected string, as the second choice.

5. The search support device according to any one of claims 1 to 4, wherein when the first choice and the second choice are the same, the display control unit displays the same choice on the display unit in a third mode that is different from the first mode or the second mode.

6. A search support method comprising:
accepting input of a search string;
searching a storage medium, which stores strings to be searched, for at least one first string that includes the search string;
searching the storage medium for at least one second string that includes a corrected string corrected from the search string;
displaying a choice, which is set to specify a specific first string from among the at least one first string to narrow search result, on a display unit in a first mode; and
displaying a choice, which is set to specify a specific second string from among the at least one second string to narrow the search result, on the display unit in a second mode that is different from the first mode.

7. A computer-readable storage medium that stores computer-executable instructions for performing a search support function comprising:
accepting input of a search string;
searching a storage medium, which stores strings to be searched, for at least one first string that includes the search string;
searching the storage medium for at least one second string that includes a corrected string corrected from the search string;
displaying a choice, which is set to specify a specific first string from among the at least one first string to narrow search result, on a display unit in a first mode; and
displaying a choice, which is set to specify a specific second string from among the at least one second string to narrow the search result, on the display unit in a second mode that is different from the first mode.
